# EUROPEAN PATENT APPLICATION

(11) **EP 3 730 226 A1**
(43) Date of publication of application: **28.10.2020**
(21) Application number: 19170513.6
(22) Date of filing: 23.04.2019
(51) Int. Cl.: B07C 5/36, B65G 47/64

(54) **WASTE SORTING UNIT, SYSTEM AND METHOD FOR SORTING WASTE**

(71) Applicant: Robowaste AB, 554 74 Jönköping (SE)
(72) Inventor: Norman, Conny, 554 74 Jönköping (SE)
(74) Representative: AWA Sweden AB

(57) **Abstract**

The present disclosure relates to a waste sorting unit (1) for sorting construction waste. The waste sorting unit (1) comprises a waste sorting member (2) comprising: a conveyor pulley (20); at least one roller (21); a conveyor belt (22) arranged around the conveyor pulley (20) and the at least one roller (21); a support structure (3) to which the waste sorting member (2) is arranged, wherein waste sorting member (2) is adapted to rotate relative the support structure (3) between a first position (P1) in which it is adapted for transporting waste objects to an upper output level (UOL) and a second position (P2) in which it is adapted for transporting waste objects to a lower output level (LOL). A system and a method for sorting construction waste is also described.

## Description

### Technical Field

The present disclosure relates to a waste sorting unit for transport and controlled discharge of waste, and in particular to a waste sorting unit adapted to identify different types of waste objects and to sort these accordingly. The present disclosure also relates to a system and a method for sorting waste.

### Background

Conventionally, recycling construction waste is a cumbersome problem since the construction waste comprises various objects and debris, each potentially being categorically different and thereby requiring different recycling process.

It is considered by many that recycling construction waste is too expensive. Therefore, many companies rather pay dedicated recycling companies to recycle the construction waste rather than doing it by themselves. Alternatively, the construction waste is dumped in landfills, which may be undesirable from an environmental perspective.

If a solution for cost-efficient recycling of construction waste was to be invented, both economic and environmental aspects could be addressed. Hence, it is desirable to find a solution for sorting construction waste in terms of categorically different waste objects and materials.

Existing solutions available today are unable to provide a sorting apparatus that solves these problems in a satisfactory fashion. Many of these involve using robotic arms that are both expensive to maintain for long periods of time. Moreover, robotic arms are often quite energy-inefficient since they often must act against gravitational influence.

Hence, there is a need for a new invention that alleviates problems of existing solutions.

### Summary

It is an object of the present invention to provide an improved solution that alleviates the mentioned drawbacks with present solutions. Furthermore, it is an object to provide a waste sorting unit for sorting waste and in particular construction waste. Moreover, it is an object to provide a waste sorting system for sorting waste and in particular construction waste. Finally, it is an object to provide a method for sorting waste and in particular construction waste. The waste sorting unit, the waste sorting system and the method for sorting waste are summarized below in respect of various embodiments.

### Waste sorting unit

According to a first aspect of the invention, a waste sorting unit for sorting construction waste is provided. The waste sorting unit may comprise a waste sorting member. The waste sorting member may comprise a conveyor pulley. The waste sorting member may comprise at least one roller. The waste sorting member may comprise a conveyor belt. The conveyor belt may be arranged around the conveyor pulley and the at least one roller. The waste sorting unit may comprise a support structure. The waste sorting member may be arranged to the support structure. The waste sorting member may be adapted to rotate relative the support structure between a first position and a second position. When in the first position, the waste sorting member may be adapted to transport waste objects to an upper output level. When in the second position, the waste sorting member may be adapted to transport waste objects to a lower output level.

A first advantage of the waste sorting unit is that it provides a relatively simple yet effective means for sorting waste material.

A second advantage of the waste sorting unit is that it provides means for sorting waste material without having to lift a waste object to be sorted away from a conveyor belt. Thus, energy is conserved, and a more cost effective sorting is provided.

A third advantage of the waste sorting unit is that it provides a reliable and robust sorting unit with few delicate components, such as in a robot arm, that may break when used for long periods of time.

A fourth advantage of the waste sorting unit is that it provides an effective sorting irrespective of the shape of a waste object to be sorted. In the case of a robot arm, the waste object to be sorted must be of a suitable shape so that it may be gripped by the robot arm.

The waste sorting unit may comprise driving means, such as a servo motor, for driving a rotation of the conveyor pulley about the conveyor pulley axis. By rotating the conveyor pulley about the conveyor pulley axis, the conveyor belt may travel around the conveyor pulley and the at least one roller. The driving means may be operated to adjust the rotational speed of the conveyor pulley. Moreover, the driving means may be operatively coupled to the conveyor pulley by means of an actuator coupling element. The actuator coupling element may be a chain, a belt, or the like. The driving means may be adapted to be controlled by a control unit.

The waste sorting member may comprise two, three, four, five, six, seven, eight, nine, ten, or more rollers. The conveyor pulley and the at least one or more rollers may all be adapted to rotate about their respective longitudinal axes in a parallel manner to each other. A plurality of rotating elements selected from the group of the conveyor pulley and the at least one or more rollers may be arranged to form an upper plane side. The conveyor belt portion currently placed at the upper plane side may be planar in shape.

The waste sorting member may comprise a first support frame and a second support frame. The conveyor pulley and the at least one or more rollers may be rotatably arranged in-between the first support frame and the second support frame.

The waste sorting unit may be adapted to transport waste or waste objects along a predetermined transport direction. The predetermined transport direction may be dependent on the rotational direction of the conveyor pulley about its conveyor pulley axis. The waste sorting unit may be adapted to transport waste objects on top of the conveyor belt along the predetermined transport direction. The conveyor belt may be an endless loop. The conveyor belt may have a predetermined length, width and thickness. The predetermined length, width and thickness may be predetermined with respect to the size, shape, and/or type of waste objects to be sorted. The conveyor belt may transport waste or waste objects along the predetermined transport direction at a predetermined transport speed. The transport speed may be controlled by the rotational speed of the conveyor pulley.

The conveyor belt may be adapted to fulfil IS specifications: 300, 400, 500, 600, 650, 800, 100, 1200 with tolerances of+/- 5mm/1mm.

The waste sorting member may comprise one or more rotating elements, such as a roller, that are arranged below the upper plane of the waste sorting member and at an offset from it. Said one or more rotating elements may each comprise a first end and a second end, each end adapted to engage with longitudinal slots arranged on the first and second support frames, respectively. Said one or more rotating elements may be adapted to be displaced away from the upper plane in at least a downward direction, thereby pushing onto an inner side of the conveyor belt in the at least downward direction. Thus, the conveyor belt may be adequately stretched during operational use. The one or more rotating elements may be adapted to self-adjust by means of gravity. The one or more rotating elements may be adapted to be adjusted by means of an actuator, either manually or automatically operated.

As mentioned, the waste sorting unit may be adapted to transport waste objects to either an upper output level and a lower output level, depending on whether the waste sorting member is positioned in the first position or the second position respectively. The waste sorting unit may be adapted with a vertical opening arranged beneath the waste sorting member. A waste object transported to the lower output level of the waste sorting unit, either by means of the conveyor belt or by means of gravity, may be transported vertically downward under influence of gravity trough said opening.

Alternatively, the waste sorting unit may be adapted with a horizontal opening. A waste object transported to the lower output level of the waste sorting unit, either by means of the conveyor belt or by means of gravity, may be transported further in a horizontal direction through said horizontal opening. The waste sorting unit may comprise a conveyor system adapted to transport waste object that reach the lower output level through the opening. Alternatively, or in combination, the waste sorting unit may comprise a slide adapted to transport waste object that reach the lower output level through the opening.

The waste sorting unit may comprise further means for facilitating the sorting process. Such means may be e.g. a pressurized gas supplying device. The pressurized gas supplying device may be arranged to shoot pressurized gas onto a waste object on the waste sorting unit in its direction of travel. Hence, the waste object to be sorted may be further accelerated in the travelling direction to either the upper output level or the lower output level. The pressurized gas supplying device may comprise a compressor. The pressurized gas may be air.

According to some embodiments, the waste sorting unit may be adapted such that the waste sorting member at the second position is sufficiently rotated with respect to a vertical axis so that waste objects on the waste sorting member slides off by means of gravity. The waste sorting member may be rotated with respect to the vertical axis by an angle within the interval of 20 to 80 degrees, more preferably by an angle within the interval of 25 to 70 degrees, or most preferably by an angle within the interval of 30 to 60 degrees.

Moreover, the conveyor belt may be provided with a material having a predetermined coefficient of static friction and/or coefficient of dynamic friction. The conveyor belt material may be appropriately selected so as to facilitate a waste object to slide relative the conveyor belt for a predetermined rotating angle. In such a case, a conveyor belt material having a small coefficient of dynamic friction may be selected. Alternatively, or in combination, a conveyor belt material having a small coefficient of static friction may be selected. The conveyor belt material may be selected so as to hinder a waste object from sliding relative the conveyor belt for a predetermined rotating angle. In such a case, a conveyor belt material having a large coefficient of dynamic friction may be selected. Alternatively, or in combination, a conveyor belt material having a large coefficient of static friction may be selected.

According to some embodiments, the waste sorting member may be adapted to rotate relative the support structure such that the rotate axis is perpendicular to the transporting direction of the waste sorting unit. By this embodiment, the driving means may be arranged about a lateral side of the waste sorting unit. Such an arrangement may be favorable as it allows for easier access of the driving means during maintenance and reparation.

According to some embodiments, the waste sorting unit may comprise an actuator, such as a servo motor, operatively coupled to the waste sorting member. The actuator may be adapted to actuate movement of the waste sorting member between the first and second position. By this embodiment, the waste sorting member may more easily be moved between the first position and the second position. The actuator may be adapted to be controlled by a control unit.

The actuator may comprise a first actuator portion and a second actuator portion. The first actuator portion may be coupled at one coupling end to the waste sorting member. The second actuator portion may be coupled at one coupling end to the support structure. The first actuator portion and the second actuator portion may be adapted to move relative each other to increase or decrease the distance between the coupling ends of the first actuator portion and the second actuator portion. By increasing or decreasing the distance between the first actuator portion and the second actuator portion, the waste sorting member may be actuated into a rotating movement between the first position and the second position.

The actuator may be a hydraulic actuator. The actuator may be a pneumatic actuator. The actuator may be an electric actuator. The actuator may be a thermal actuator. The actuator may be a magnetic actuator. The actuator may be a mechanical actuator.

According to some embodiments, the waste sorting unit may comprise a crankshaft. The crankshaft may be rotatably arranged to the support structure. The crankshaft may comprise a main shaft. The crankshaft may comprise a crankpin. The crankpin may be axially offset from the main shaft. The crankshaft may be adapted to couple to a connecting member elongate in shape, having a first longitudinal end and a second longitudinal end. The first longitudinal end may be rotatably coupled to the crankpin. The second longitudinal end may be rotatably coupled to the waste sorting member. By this embodiment, the momentum of the waste sorting member may be preserved, thereby saving energy and improving the rotating speed of the waste sorting member when moving between the first position and the second position.

The crankshaft may be adapted to be rotatable relative the support structure about a crankshaft axis. The crankshaft may be adapted to be rotatable relative the support structure so that the crankshaft axis is parallel with the rotating axis of the waste sorting member. The crankshaft may be rotatably coupled to the support structure such that the crankshaft axis is below the rotating axis of the waste sorting member.

The crankpin may extend parallel to the main shaft. The crankpin may be arranged between two crankpin plates. The two crankpin plates may be displaced from each other so as to form a gap between them. The gap may be slightly wider than the width of the connecting member. When the crankshaft rotates about its axis, the connecting member may rotate into the gap between the two crankpin plates. The two crankpin plates may be equal in size and form. The two crankpin plates may be provided in a dense and/or heavy material. Hence, when the two crankpin plates are rotated about the crankshaft axis, their combined weight may facilitate moving the waste sorting member between the first position and the second position.

The waste sorting member may comprise a support shaft. The support shaft may be arranged on a bottom side of the waste sorting member. The support shaft may be arranged parallel with the conveyor pulley and the at least one or more rollers of the waste sorting member. The connecting member may be rotatably coupled to the support shaft. Alternatively, the support shaft may be rotatably coupled to the waste sorting member. The connecting member may be fixedly coupled to the support shaft. The support shaft of the waste sorting member and the connecting member may be formed as an integral part.

The crankpin, and at least one but preferably two crankpin plates may together form a crankpin unit. The crankshaft may comprise a plurality of such crankpin units. The crankshaft may comprise two, three, four, five, six, seven, eight, nine, ten, or more crankpin units. Each of the one or more crankpin units may be interconnected by a set of shaft portions. The set of shaft portions may be coaxially aligned so as to form the main shaft. Each of the one or more crankpin units may be rotatably coupled to a connecting member which in turn is rotatably or fixedly coupled to the support shaft of the waste sorting member, depending on whether the support shaft is rotatable relative the waste sorting member.

According to some embodiments, the waste sorting unit may comprise a sorting guide. The sorting guide may be arranged to rotate below the waste sorting member between a first lateral position and a second lateral position. By this embodiment, waste objects that are transported to the lower output level may be further transported into a lateral direction relative the transport direction of the conveyor belt. The sorting guide may be rotatably arranged to the support structure of the waste sorting unit. The sorting guide may be adapted to rotate about a rotating axis perpendicular to the rotating axis of the waste sorting member. The sorting guide may comprise a large plate-like structure which when rotated forms a slide. The large plate-like structure may be quadrilateral in shape, for instance rectangular or squared. The large plate-like structure may be curved.

According to some embodiments, the sorting guide may be shaped in size and form so as to sort waste objects into a first sorting zone while being in said first lateral position, and to sort waste into a second sorting zone while being in said second lateral position. By this embodiment, waste objects that are transported to the lower output level may be further transported into either lateral direction relative the transport direction of the conveyor belt.

The sorting guide may comprise two large plate-like structures which are arranged to join each other along an upper edge. The opposite edges of the plate-like structures may be arranged to a main shaft. The main shaft may be adapted to be rotatable relative the support structure of the waste sorting unit. The main shaft may be adapted to be rotatably coupled to the support structure of the waste sorting unit. The main shaft may define the rotating axis of the sorting guide.

Either of the large plate-like structures, but preferably both, may be quadrilateral in shape, for instance having a rectangular shape or square shape. Either of the large plate-like structures, but preferably both, may be curved. The waste sorting unit may be adapted so that the rotating axis of the sorting guide is centered below the waste sorting member.

According to some embodiments, the sorting guide may comprise a counterweight. The counterweight may facilitate the sorting guide in returning to an equilibrium position, i.e. a position in which the sorting guide is balanced in terms of gravitational influence. The sorting guide may be adapted such that sorting guide is oriented in a vertical position when in the equilibrium position.

The counterweight may be arranged to one end of the main shaft of the sorting guide. The main shaft of the sorting guide may extend through the support structure of the waste sorting unit. The counterweight may be arranged to the end extending through the support structure of the waste sorting unit. The counterweight of the sorting guide may extend symmetrically away from the main shaft of the sorting guide. The counterweight may extend along arcs extending outward from the main shaft.

According to some embodiments, the sorting guide may comprise an actuator operatively coupled to the sorting guide. The actuator may be a servo motor. The actuator may be adapted to actuate movement of the sorting guide between the first lateral position and the second lateral position by rotating an actuator head relative an actuator housing about an actuator axis. The actuator housing may be arranged fixedly relative the support structure of the waste sorting unit. The actuator housing may be arranged fixedly to the support structure of the waste sorting unit. The actuator may be adapted to be controlled by a control unit.

According to some embodiments, the sorting guide may comprise an actuator coupling element. The actuator coupling element may extend partly in a circumferential direction of the counterweight. The actuator head may be adapted to rotatably engage with the actuator coupling element. The actuator may be adapted to move the sorting guide between the first lateral position and the second lateral direction by rotating the actuator head relative the actuator housing. The actuator coupling element may be a chain, a belt or the like.

According to some embodiments, the waste sorting unit may comprise a first and at least a second waste sorting member. The first and the at least a second waste sorting member may be arranged adjacently to one another. The first and the at least a second waste sorting member may be arranged adjacently to one another to form a common transport path for waste objects to travel along when being moved to be sorted. The first and the at least a second waste sorting member may be arranged adjacently to one another to form parallel transport paths for waste objects to travel along when being moved to be sorted. The first and the at least a second waste sorting member may be adapted to rotate independently from one another with respect to the support structure. Naturally, the waste sorting unit may comprise two, three, four, five, six, seven, eight, nine, ten or more waste sorting members, each rotatably arranged to the support structure and independently rotatable.

According to some embodiments, the waste sorting unit may be adapted to allow for the transport speed of the first and the at least second waste sorting member to be controlled individually. Each waste sorting member may be coupled to its own driving means, which may be individually controlled by a control unit.

According to some embodiments, the waste sorting unit may comprise bearings. The bearings may be arranged at positions where two components rotate or rotate relative each other. By implementing bearings, frictional forces are being mitigated, thereby reducing energy losses.

For instance, bearings may be arranged in-between crankshaft and the support structure. Bearings may be arranged in-between the one or more crankpin units and the associated coupling member. Bearings may be arranged in-between the conveyor pulley and each support frame of the waste sorting member. Bearings may be arranged in-between the at least one roller and each support frame of the waste sorting member. Bearings may be arranged in-between the conveyor pulley and the support structure.

According to some alternative embodiments, the waste sorting member may be adapted to rotate relative the support structure such that the rotate axis is perpendicular to the transporting direction of the waste sorting unit. By this embodiment, waste objects may be transported in a lateral direction without using a sorting guide.

According to some further alternate embodiments, the waste sorting member may be adapted to be able to switch direction of rotating between a left rotating direction and a right rotating direction with respect to the transporting direction. By this embodiment, waste objects may be transported in either lateral direction without using a sorting guide.

### Waste sorting system

According to a second aspect of the invention, a waste sorting system is provided. The waste sorting system may comprise a separating device. The separating device may be adapted to separate waste objects that are to be sorted. The waste sorting system may comprise a volume measuring device. The volume measuring device may be adapted to measure volume of waste objects that are to be sorted. The waste sorting system may comprise a weight measuring device. The weight measuring device may be adapted to measure weight of waste objects that are to be sorted. The waste sorting system may comprise at least one waste sorting unit. The at least one waste sorting unit may be adapted to sort waste objects. The waste sorting system may comprise a control device. The control device may be adapted to control the waste sorting system so as to sort waste objects by controlling the at least one waste sorting unit based on data from the volume measurement device and the weight measuring device.

The control unit may be adapted to control the waste sorting system based on available capacity of the parts of the waste sorting system. By capacity, it may refer to the amount of waste objects any part of the system, for a given processing speed, may process without causing a bottleneck. Ideally, the control unit may be adapted to control each part of the waste sorting system such that the overall amount of sorting done by the waste sorting system as a whole is increased.

### Separating device

The separating device may be adapted to separate unsorted waste objects from unsorted waste. By unsorted waste, it may be meant waste containing different objects, construction particles, dust etc. of various sizes and materials.

The separating device may comprise an inlet end. The separating device may be adapted to receive unsorted waste via said inlet end. The separating device may comprise an outlet end. The separating device may be adapted to provide separated waste objects via said outlet end.

The separating device may define a transport path from the inlet end to the outlet end. The separating device may comprise transporting means for transporting the unsorted waste along the transport path. The transporting means may be a plurality of rollers. The rollers may be arranged parallel to one another. The rollers may be arranged perpendicularly to a transport direction. The rollers may define the transport path between the inlet end and the outlet end of the separating device. The unsorted waste may be transported along the transport path by means of rotating the rollers along their respective longitudinal axes.

Some of the rollers of the separating device may be separating rollers. A separating roller may comprise an axle which incorporates one or more discs arranged to rotate about the rotational axis of its roller. A separating roller may have one disc, two discs, three discs, four discs, five discs, six discs, seven discs, eight discs, nine discs, ten discs or more discs. The discs may be circular, elliptical or have a general oblong shape. When a separating roller rotates, it may push or lift a waste object in such a way so that its position relative the transport path is altered.

The separating device may comprise an actuating device which is coupled to one roller or separating roller to control its angular velocity. The actuating device may be coupled to one or more rollers and/or separating rollers to control their angular velocity. The actuating device may be configured to be able to control the direction of rotation also of the one or more rollers. The actuating device may be an electric motor. The separating device may comprise a plurality of electric motors to control a predetermined set of rollers or separating rollers.

The separating device may be adapted such that each of the rollers, and in particular the separating rollers, can be independently adjusted in terms of angular velocity and direction of rotation. The separating device may be configured to control the rollers and/or the separating rollers to separate the waste objects in the separating device from one another. The waste objects may be separated from one another by a predetermined distance. The predetermined distance may be adjusted based on a sorting speed of the waste sorting unit, meaning, the time it takes for the waste sorting unit to transport a waste object being received to the upper output level or the lower output level and return to a receiving position. In one embodiment, the predetermined separating distance may be about 0,5 meters.

The separating device may comprise one or more sensors to measure the distance between waste objects being transported to the output end of the separating device. If the distance between two waste objects deviates from the predetermined separating distance by an amount exceeding a tolerance level, the angular velocity of the rollers may be adjusted so that the waste objects are brought closer or farther away from each other until the predetermined distance is achieved.

By the separating rollers, the separating device may be enabled to lift and move waste objects to be sorted. In principle, this may allow the separating device to "shake" the waste objects.

The separating device may be adapted to separate waste objects having a size within a preferred object size interval by shaking the unsorted waste. The preferred object size interval may be given in height (H), length (L) and height (W). The waste sorting unit of the first aspect of the invention, or any embodiments thereof, may be sized and formed so as to be able to sort objects having a size within the preferred object size interval. The preferred object size interval may range between H = 0,5 cm, L = 10 cm, W = 10 cm up to H = 50 cm, L = 80 cm, W = 50 cm.

The separating device may comprise a cover adapted in size and shape to prevent waste objects larger than the preferred object size interval to enter the separating device. The cover may be a grating, a set of rods, bars or the like. The cover may be arranged at the inlet end of the separating device. Waste objects may be too large in two different aspects. It may be too large in just dimension, i.e. being too long. In such a case, the waste sorting system may be adapted in size and shape so that such an object is transported through the whole system and ends up in a container of unsorted objects at the end of the waste sorting system. Moreover, a waste object may be too large in two dimensions, in which case it may be prevented from entering the waste sorting system by the cover.

The rollers of the separating device may be arranged a predetermined roller distance from one another. The predetermined roller distance may be selected so that objects smaller than the preferred object size falls through the rollers by means of gravity. Below the rollers, containers may be arranged to collect the waste objects too small to be sorted.

The separating device may be adapted to provide a dynamic separating speed. The separating speed may increase when capacity is available in a subsequent part of the waste sorting system. The separating speed may decrease when capacity is lacking in a subsequent part of the waste sorting system.

Moreover, by exposing the waste objects to shaking motions, waste objects may be separated from each other in the direction of transportation. The separating device may be adapted to separate consecutive waste objects by the predetermined separation distance. The waste sorting unit of the first aspect of the invention, or any embodiments thereof, may be sized and formed so as to be able to sort objects which are separated by this predetermined separation distance.

According to some embodiments, the separating device may be adapted to align waste objects in a row along the direction of transportation.

According to some embodiments, the separating device may be adapted to verify that separated waste objects indeed are separated from each other. A first potential case may be that two or more waste objects are stacked on top of each other. A second potential case may be that two or more waste objects are located in close proximity of each other so as to give the appearance to be one seamless waste object. A third potential case may be a combination of the first case and the second case. The separating device may comprise a sensor, such as a distance sensor or an imaging device, for providing data from which the control unit may be able determine whether waste objects are indeed adequately separated from each other or not. The sensor may be arranged to measure waste objects at the outlet end of the separating device.

According to some embodiments, if a plurality of unseparated waste objects is detected, the separating device may transmit this information to the control unit. The control unit may order a subsequent sorting unit adapted to sort a detected unseparated plurality of waste objects. The waste sorting system may be adapted so that sorted unseparated pluralities of waste objects are transported back to the separating device so that they can be adequately separated. The waste sorting unit may transport the detected unseparated pluralities of waste objects to a conveyor system adapted to lead back to the inlet end of the separating device.

### Volume measuring device

The volume measuring device may be adapted to measure volume of waste objects that are to be sorted.

The volume measuring device may comprise two or more imaging units. The two or more imaging units are spatially displaced from each other within the system. The two or more imaging units may be oriented so that they are aimed towards a mutual imaging zone. When a waste object is placed in the mutual imaging zone, the two or more imaging units are adapted to image the waste object placed in the mutual imaging zone but from different angles. Based on the images of the waste object from the two or more imaging devices, a volume may be estimated.

The volume measuring device may determine a geometry of an imaged waste object. From the acquired images, the waste sorting system may be adapted to triangulate a set of points, or polygons, that depicts the geometry of the imaged waste object. The system may then create a polygon mesh from the set of points. The faces of the polygon mesh may be triangles, quadrilaterals, or other simple convex polygons. The system may then integrate the polygon mesh to estimate the volume of the imaged waste object.

The mutual imaging zone may be defined by a specific conveyor belt system portion. One or more of the conveyor belts in the mutual imaging zone may have distinct patterns, such as a grid pattern. The grid pattern may incorporate a plurality of different colors, e.g. black and white. The grid pattern may provide a reliable background imaging surface for the imaging devices so that the geometry of light colored waste objects or waste objects of highly reflective surfaces can be accurately determined.

According to some embodiments, the volume measuring device may comprise three, four, five, six, seven, eight, nine, ten or more imaging units.

According to a preferred embodiment, the volume measuring device may comprise a plurality of four imaging units. The plurality of four imaging units may be spatially displaced from each other and arranged in a square formation, one imaging unit in each corner of the square. The four imaging units may be oriented so that they are able to image all unobstructed sides of a waste object.

According to some embodiments, the volume measuring device may be adapted to measure volume of a plurality of waste objects simultaneously. The volume measuring device may comprise a set of two or more pluralities of imaging units, each plurality of imaging units arranged to image a plurality of individual imaging zones.

### Weight measuring device

The weight measuring device may be adapted to measure weight of waste objects that are to be sorted. The weight measuring device may comprise a load cell coupled to a conveyor belt system portion. The load cell may be configured to generate an electrical signal indicative of the weight of the waste object located on the conveyor belt system portion. The load cell may be a load cell of hydraulic, pneumatic, and strain gauge type.

According to some embodiments, the weight measuring device may be adapted to be calibrated using objects of which the weight is known.

### Waste sorting unit

The at least one waste sorting unit may be adapted to sort waste objects. The system may comprise a plurality of waste sorting units.

According to some embodiments, at least one of the at least one waste sorting unit may be a waste sorting unit according to the first aspect of the present invention, or any embodiments thereof. Said at least one waste sorting unit may be adapted to sort waste objects by rotating the respective waste sorting member between the first position and the second position.

According to some embodiments, at least two, three, four, five, six, seven, eight, nine, ten, or more, or all of the waste sorting units may be a waste sorting unit according to the first aspect of the present invention, or any embodiments thereof.

### Control device

The control device may be adapted to control the waste sorting system so as to sort waste objects by controlling the at least one waste sorting unit based on data from the volume measurement device and the weight measuring device.

The control device may be adapted to be communicatively coupled to one or more parts of the waste sorting system. The control device may be adapted to receive data from said one or more parts of the waste sorting system. The control device may be adapted to compile data from sensors in the waste sorting system to determine the type of waste object to be sorted.

If the control device is successful in identifying a waste object to be sorted, it may control a waste sorting unit adapted to sort that particular waste object to activate, thereby sorting said waste object. Said waste object may be transported to a receptacle for storing that particular type of waste objects.

If the control device is unsuccessful in identifying a waste object to be sorted, it may control a waste sorting unit adapted to sort unidentified waste objects to activate, thereby sorting said waste object. The unidentified waste object may be transported to a receptacle for storing unidentified waste objects. A user may then perform a manual inspection to identify each unidentified waste object stored in the receptacle. Based on the manual inspection, the waste sorting system may be provided with information with respect to each waste object it was unsuccessful in identifying, so as to improve sorting of those types of waste objects in the future.

### Transporting device

According to some embodiments, the waste sorting system may comprise a transporting device. The transporting device may be a conveyor system. The transporting device may be adapted to transport waste objects throughout at least a portion of the waste sorting system.

According to some embodiments, the transporting device may be adapted to transport waste objects between two different vertical heights. The transporting device may be adapted to transport waste objects from a lower vertical height to a higher vertical height. The transporting device may be adapted to transport waste objects from a higher vertical height to a lower vertical height. The transporting device may comprise a slide. The slide may be straight or curved.

According to some embodiments, the transporting device may be adapted to provide a dynamic transport speed. The waste sorting system may be adapted to increase the transport speed of the transporting device when capacity is available. The waste sorting system may be adapted to decrease the transport speed of the transporting device when capacity is lacking. The transporting device may be adapted to provide a transport speed between 0,01 m/s to 2 m/s, and more preferably 0,1 m/s - 1,5 m/s. The waste sorting system may be adapted such that the transport speed of the transporting device during normal operation is about 1 m/s.

By low transport speed, it may be meant 0,01 m/s to 0,5 m/s. By normal transport speed, it may be meant about 0,5 - 1,2 m/s. By high transport speed, it may be meant 1,2 m/s or above.

According to some embodiments, the waste sorting system may comprise a plurality of transporting devices. The plurality of transporting devices may be adapted to form one or more transport paths for waste. The plurality of transporting devices may be adapted to form a set of parallel transport paths for waste objects. The plurality of transporting devices may be adapted to form a set of branching transport paths.

### Texture measuring device

According to some embodiments, the waste sorting system may comprise a texture measuring device. The texture measuring device may be adapted to measure texture of waste objects. The waste sorting system may be adapted to sort waste objects by means of the at least one waste sorting unit based on data from the texture measuring device.

The texture measuring device may comprise an imaging unit. The imaging unit may be adapted to image a waste object. Based on the image of the imaged waste object, color and patterns may be determined.

The texture measuring device may comprise a depth sensor. The depth sensor may be adapted to measure surface elevations of a waste object.

The control unit may be adapted to determine, based on data with respect to color and pattern from the texture measuring device, and data with respect to surface elevations from the texture measuring device, the texture of a waste object.

The control unit may be adapted to cross check a measured texture of a waste object with a database comprising a set of annotated images of waste objects, i.e. a set of waste objects images which are annotated in respect to the type of material of the waste object being displayed in each image.

When a match has been found, the control unit may use this information when controlling the waste sorting system as a whole so as to sort that particular waste object correctly.

The database of annotated images of waste objects may be expanded by user input. The database of annotated images of waste objects may be expanded automatically by the waste sorting system.

### Other sensory devices

According to some embodiments, the waste sorting system may comprise one or more sensory devices. Said one or more sensory devices may be selected from a group of sensory devices comprising:
- a magnetic metal detecting device for providing data indicating the presence of magnetic metals;
- an induction device for providing data indicating the presence of nonmagnetic metals.

The waste sorting system may be adapted to sort waste objects based on data received by the one or more sensory devices.

According to some embodiments, the waste sorting system may be adapted to be remote controlled.

### Modular waste sorting system

According to some embodiments, the waste sorting system may be adapted to be modular. The waste sorting system may comprise a set of optional waste sorting system modules. The set of optional waste sorting system modules may be selected from a group of waste sorting system modules comprising:
- a separating module comprising the separating device;
- a volume measuring module comprising the volume measuring device;
- a weight measuring module comprising the weight measuring device;
- a texture measuring module comprising the texture measuring device;
- a transporting module for transporting waste objects between any two waste sorting system modules;
- a feeder module for feeding waste to the separating module;
- a magnetic metal detecting module comprising the magnetic metal detecting device, and
- an induction module comprising the induction detecting device.

A first advantage of a modular waste sorting system is that any of the modules may be independently replaceable or upgradeable from the rest of the modules.

A second advantage of a modular waste sorting system is that the waste sorting system may more easily be altered or expanded over time.

Each optional waste sorting system module may be associated with a processing speed. Each waste sorting system module may be associated with a capacity. The control unit may be adapted to receive data with respect to the capacity of each module and control the processing speed of each waste sorting system module independently, so as to more effectively run the waste sorting system as a whole.

According to some embodiments, each of the optional waste sorting system modules may be adapted to be controlled by the system module. Any one of the optional waste sorting system modules may comprise an emergency stop.

According to some embodiments, the waste sorting system may comprise a feeder module. The feeder module may be adapted for feeding waste to the separating device of the feeder module. The feeder module may comprise an intake storage.

According to some embodiments, the feeder module may be adapted to receive unsorted waste from a loader. The loader may dump a scoop of waste with some predetermined volume at some predetermined frequency for a predetermined time duration. The predetermined volume, frequency and/or time duration may be determined based on available capacity of the shaking module, or based on available capacity of subsequent modules, and or the available capacity of the system as a whole. The predetermined volume, frequency and/or time duration may be determined based on the amount of unsorted waste that remains to be sorted. For instance, a loader may dump a scoop of waste having a predetermined volume of 1 m³, at a predetermined frequency of once every minute, for a predetermined time duration of 30 minutes.

Moreover, the feeder module may comprise an intake storage. The intake storage may comprise a container adapted for storing unsorted waste. The intake storage may have feedings means for providing continuous feeding of waste into the feeder module. The container of the intake storage may be adapted to store a large volume of waste so that a loader is not required to frequently dump waste into the feeder module. Preferably, the intake storage is adapted to contain such a large volume of waste, which intake storage, when filled, allows the feeder module to work independently for long periods of time.

According to some embodiments, the interface module may be adapted to provide information regarding overall system performance. The interface module may be adapted to be accessed using a computing device. The interface module may be adapted to be accessed using a terminal. The computing device may be a portable device. The interface module may be adapted to present information portraying various aspects of performance of the waste sorting system. For instance, the interface module may present information regarding how much waste has been sorted, what types of waste objects have been sorted and to what degree.

According to some embodiments, the interface module may be adapted to provide remote controlling of the waste sorting system.

### Method

According to a third aspect of the present invention, a method for sorting waste and in particular construction waste is provided. The method may comprise a step of providing unsorted waste. The method may comprise a step of separating unsorted waste into waste objects that are to be sorted. The method may comprise a step of measuring a volume of one of the waste objects. The method may comprise a step of measuring a weight of said one of the waste objects. The method may comprise a step of sorting said one of the waste objects. The sorting may be performed by means of a waste sorting unit according to the first aspect of the invention, or any embodiments thereof. The sorting may be performed based on the measured volume of said one of the waste objects. The sorting may be performed based on the measured weight of said one of the waste objects.

According to some embodiments, the method may comprise a step of measuring a texture of said one of the waste objects. The method may comprise a step of cross checking the measured texture with a database comprising a set of annotated images of waste objects. If a match is found, the step of sorting may be performed based on the measured texture of said one of the waste objects.

Moreover, the method may comprise a step of action that is described in relation to the first aspect of the waste sorting unit, or any embodiments thereof. The method may comprise a step of action that is described in relation to the waste sorting system, or any embodiments thereof.

### Use

According to a fourth aspect of the present invention, a use of a waste sorting unit according to the first aspect of the invention, or any embodiments thereof, for sorting construction waste, is provided.

According to a fifth aspect of the present invention, a use of a waste sorting system according to the second aspect of the invention, or any embodiments thereof, for sorting construction waste, is provided.

According to a sixth aspect of the present invention, a use of a method according to the third aspect of the invention, or any embodiments thereof, for sorting construction waste, is provided.

### Brief Description of the Drawings

The invention will in the following be described in more object with reference to the enclosed drawings, wherein:
Fig. 1 illustrates a perspective view of the waste sorting unit according to one embodiment of the invention;
Fig. 2 illustrates a top view of the waste sorting unit according to one embodiment of the invention;
Fig. 3 illustrates a front view of the waste sorting unit according to one embodiment of the invention;
Figs. 4a - 4h illustrate schematically the working principle of the waste sorting unit according to one embodiment of the invention;
Fig. 5a illustrates a perspective view of the waste sorting system according to one embodiment of the invention;
Fig. 5b illustrates a perspective view of the waste sorting system according to one embodiment of the invention, wherein a plurality of shell portions has been omitted from the view;
Fig. 6 illustrates a side view of the waste sorting system according to one embodiment of the invention, wherein a plurality of shell portions has been omitted from the view;
Fig. 7 illustrates a side view of a selection of the waste sorting system according to one embodiment of the invention;
Figs. 8a - 8b illustrate various parts of the waste sorting system according to one embodiment of the invention;
Fig. 9 illustrate a part of the waste sorting system according to one embodiment of the invention;
Fig. 10 illustrate a part of the waste sorting system according to one embodiment of the invention;
Figs. 11 a - 11 c illustrate various views of the waste sorting unit, along with a portion of the waste sorting system, according to one embodiment of the invention, and
Fig. 12 illustrate a flow chart of a method according to one embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

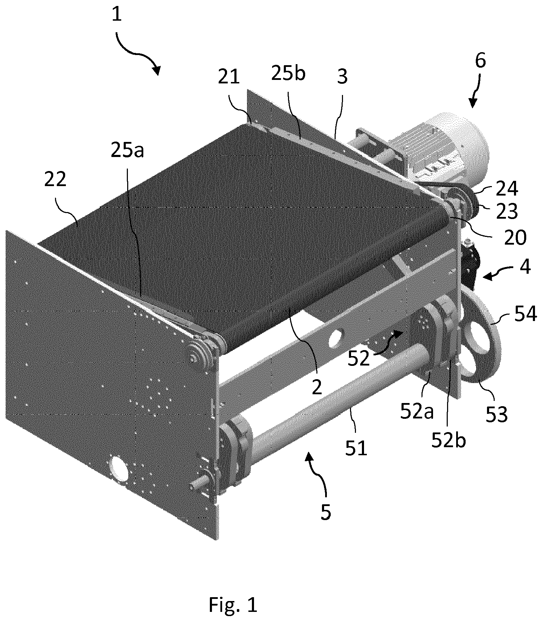

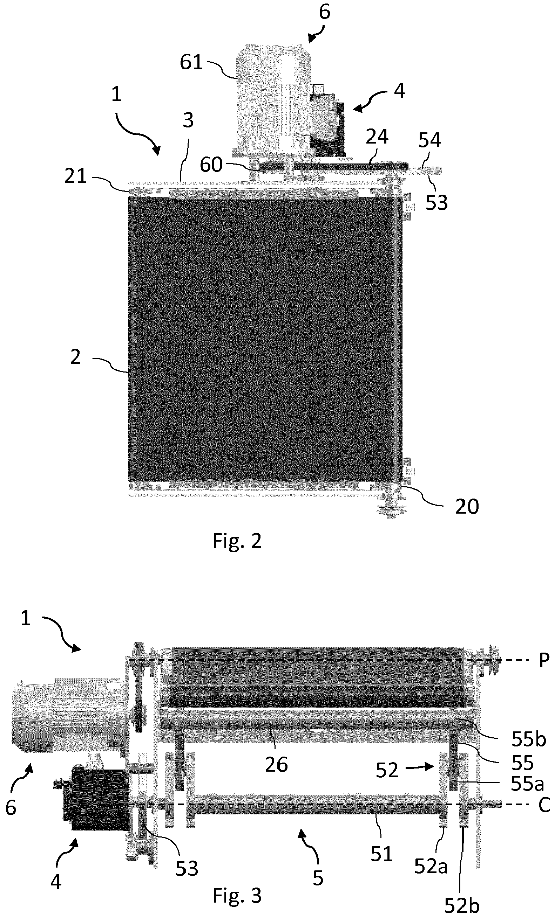

Fig. 1 illustrates a perspective view of the waste sorting unit 1 according to one embodiment of the invention. Fig. 2 illustrates a top view of the waste sorting unit 1 according to one embodiment of the invention. Fig. 3 illustrates a front view of the waste sorting unit 1 according to one embodiment of the invention.

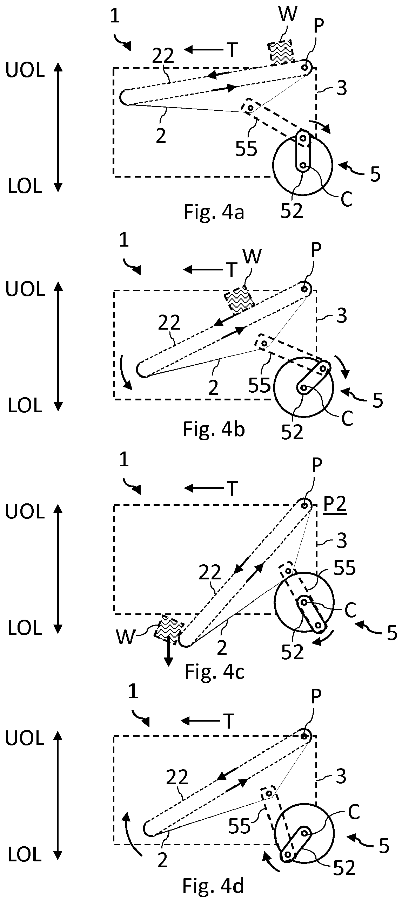

The waste sorting unit 1 comprises a waste sorting member 2. The waste sorting member 2 comprises a conveyor pulley 20. The waste sorting member 2 comprise plurality of rollers 21, some of which are hidden from view in Fig. 1. The waste sorting member 2 comprises a conveyor belt 22. The conveyor belt 22 is arranged around the conveyor pulley 20 and the plurality of rollers 21. The waste sorting unit 1 comprises a support structure 3. The waste sorting member 2 is arranged to the support structure 3 and is adapted to rotate relative the support structure 3 between a first position P1 and a second position P2 (see Figs. 4a - 4h). When in the first position P1, the waste sorting member 2 is adapted to transport waste objects to an upper output level UOL. When in the second position P2, the waste sorting member is adapted to transport waste objects to a lower output level LOL.

The waste sorting unit 1 comprises a servo motor 6 for driving a rotation of the conveyor pulley 20 about the conveyor pulley axis P. By rotating the conveyor pulley 20 about the conveyor pulley axis P, the conveyor belt travels around the conveyor pulley 20 and the plurality of rollers 21. The servo motor 6 is adapted to be operated by means of a control unit to adjust the rotational speed of the conveyor pulley to a preferred rotational speed. The servo motor 6 comprises a servo motor head 60, and a servo motor housing 61. The servo motor head 60 is adapted to rotate relative the servo motor housing 61 about a servo motor axis. The servo motor 6 is operatively coupled to the conveyor pulley 20 by means of an actuator coupling element 24. In particular, the actuator coupling member 24 is arranged to travel around the servo motor head 60 and a conveyor pulley head 24 coaxially arranged to the main body of conveyor pully 20.

The conveyor pulley 20 and the plurality of rollers 21 are arranged to form an upper plane side of the waste sorting member 2. The conveyor belt portion of the conveyor belt 22 currently placed at the upper plane side is substantially planar in shape.

The waste sorting member 2 comprises a first support frame 25a and a second support frame 25b. The conveyor pulley 20 and the plurality of rollers 21 are rotatably arranged in-between the first support frame 25a and the second support frame 25b

The waste sorting member 2 is adapted to rotate relative the support structure 3 such that the rotational axis P is perpendicular to the transporting direction T of the waste sorting unit 1.

The waste sorting unit 1 comprises a crankshaft 5. The crankshaft 5 is rotatably arranged to the support structure 3. The crankshaft 5 comprises a main shaft 51. The crankshaft comprises a crankpin 52. The crankpin 52 is axially offset from the main shaft 51. The crankshaft 5 is adapted to couple to a connecting member 55 elongate in shape, having a first longitudinal end 55a and a second longitudinal end 55b. The first longitudinal end 55a is rotatably coupled to the crankpin 52. The second longitudinal end 55b is coupled to a support shaft 26 arranged below the waste sorting member 2. The support shaft 26 is rotatably coupled to the waste sorting member 2. The support shaft 26 of the waste sorting member and the connecting member are formed as an integral part.

The crankshaft 5 is adapted to be rotatable relative the support structure 3 about a crankshaft axis C. The crankshaft 5 is adapted to rotate relative the support structure 3 so that the crankshaft axis C is parallel with the rotating axis P of the waste sorting member 2. The crankshaft 5 is rotatably coupled to the support structure 3 such that the crankshaft axis C is below the rotating axis P of the waste sorting member 2.

The crankpin 52 extend parallel to the main shaft 51. The crankpin 51 are arranged between two crankpin plates 52a, 52b (see Fig. 3). The two crankpin plates 52a, 52b are displaced from each other so as to form a gap between them. The gap may be slightly wider than the width of the connecting member 55. Hence, when the crankshaft 5 rotates about its axis C, the connecting member 55 may rotate into the gap between the two crankpin plates 52a, 52b. The two crankpin plates 52a, 52b are equal in size and form.

The crankshaft 5 comprises an additional crankpin axially offset relative the crankpin 52. The additional crankpin is arranged in-between an additional set of crankpin plates. The crankpin 52 and the additional crankpin are aligned in a mutual crankpin axis. An additional connecting member couples the additional crankpin with the support shaft 26 of the waste sorting member 2. When the waste sorting member 2 is rotated about the rotational axis P to move between the first position P1 and the second position P2, the two connecting members 55 are parallel throughout the whole movement.

The waste sorting unit 1 comprises a servo motor 4 operatively coupled to the waste sorting member 2 by means of the crankshaft 5. The servo motor 4 comprises a servo motor head rotatably arranged to a servo motor housing. The servo motor 4 is adapted to actuate movement of the waste sorting member 2 between the first position P1 and the second position P2. The servo motor head is operatively coupled to a wheel 53 coaxially arranged to an end of the crankshaft 5 by means of a coupling belt 54, see Fig. 1 and 2. The wheel 53 is provided with a larger diameter than the servo motor head of the servo motor 4.

Figs. 4a - 4h illustrate schematically the working principle of the waste sorting unit 1 according to one embodiment of the invention. The waste sorting unit 1 is schematically shown as seen from the left. The conveyor belt 22 travel counter clockwise, in all Figs. 4a - 4h. Consequently, the transport direction T is pointing to the left all said figures.

In Fig. 4a, a waste object W to be sorted is arranged on top of the conveyor belt 22. The waste sorting unit 1 is controlled to sort the waste object W. As indicated in Fig. 4a, the crankshaft 5 is controlled to rotate relative the support structure 3 about the crankshaft axis C in a clockwise direction.

In Fig. 4b, the waste object W travels a distance along the top of the waste sorting member 2. The crankshaft 5 has rotated about 45 degrees from its position shown in Fig. 4a, and the connecting member 55 has been pulled toward the right due to its coupling with the crankshaft 5 via the crankpin 52. Consequently, due to the fixed length of the connecting member 55, the waste sorting unit 2 is pulled downward, away from the upper output level UOL and towards the lower output level LOL.

In Fig. 4c, the crankshaft 5 has rotated about 135 degrees clockwise from its position shown in Fig. 4a, and the connecting member 55 and the crankpin plate 52 are oriented substantially parallel to each other, and the waste sorting member 2 is positioned in the second position P2. The waste object W, which has travelled to the end of the waste sorting member 2, to the lower output level LOL, now tilts over and is about to fall downward due to being influenced by gravity. Eventually, the waste object W is transported to a receptacle (not shown) adapted to store waste objects of a similar type as the waste object W. The waste object W has thus been sorted.

In Fig. 4d, the crankshaft 5 has continued to rotate relative the support structure 3 about the crankshaft axis C, approximately 225 degrees in a clockwise direction from its position shown in Fig. 4a. Now, the waste sorting member 2 is forced to rotate upwards relative the support structure about the rotational axis P, away from the lower output level LOL up towards the upper output level UOL. As is shown in Fig. 4d, the coupling member 55 pushes onto the waste sorting member 2. The crankshaft 5 in turn pushes onto the coupling member 55 in an upward direction. Hence, momentum of the crankshaft 5 is used to push the waste sorting member 2 upwards.

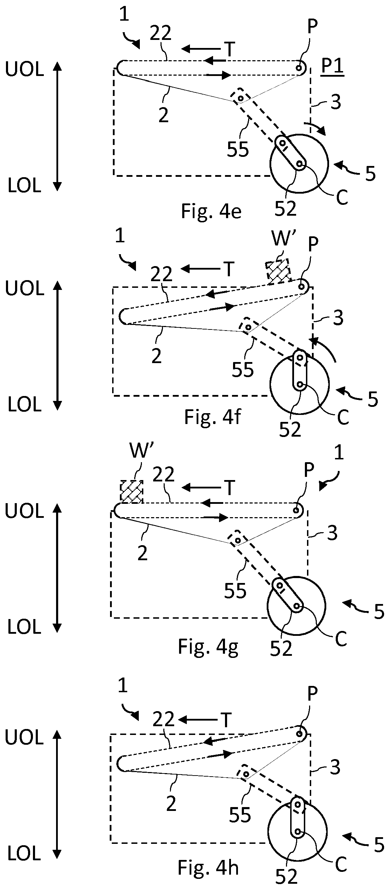

In Fig. 4e, the crankshaft 5 has continued to rotate relative the support structure 3 about the crankshaft C, approximately 315 degrees in a clockwise direction from its position in Fig. 4a. The connecting member 55 and the crankpin plates 52 are once more arranged parallel. The waste sorting unit 2 has moved up toward the upper output level, to the first position P1. However, no waste object is to be transported to the upper output level.

In Fig. 4f, the waste sorting member 2 is in the same position as shown in Fig. 4a, however, this time around, a new waste object W' is arranged on top of the waste sorting member 2. The control unit determines that the new waste object W' is not to be sorted at this particular waste sorting unit 1. The control unit therefor controls the waste sorting unit 1 to transport the new waste object W' directly to the upper output level UOL, which involves rotating the crankshaft 5 in a counter-clockwise direction about the crankshaft axis C, as shown in Fig. 4f.

In Fig. 4g, the waste sorting member 2 is positioned in the first position P1 and the new waste object W' is transported to the upper output level UOL, through which upper output level UOL it may travel to a subsequent waste sorting unit.

In Fig. 4h, the waste sorting member 2 is return to its original position as shown in Fig. 4a, by rotating the crankshaft 5 relative the support structure 3 in a clockwise direction.

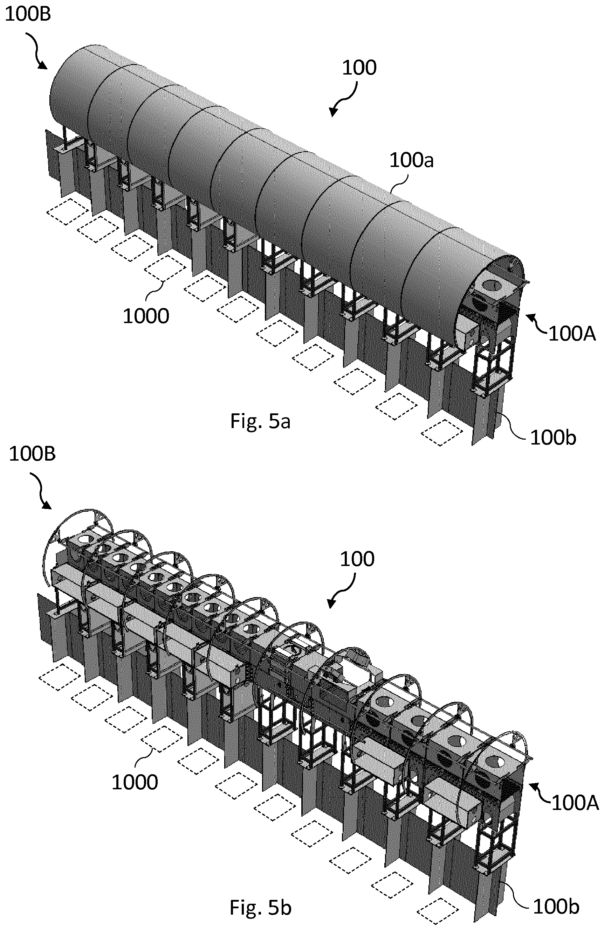

Fig. 5a illustrates a perspective view of the waste sorting system 100 according to one embodiment of the invention. Fig. 5b illustrates a perspective view of the waste sorting system 100 according to one embodiment of the invention, wherein a plurality of shell portions 100a has been removed. The waste sorting system 100 comprises a separating device. The separating device is adapted to separate waste objects that are to be sorted. The waste sorting system 100 comprises a volume measuring device. The volume measuring device is adapted to measure volume of waste objects that are to be sorted. The waste sorting system 100 comprises a weight measuring device. The weight measuring device is adapted to measure weight of waste objects that are to be sorted. The waste sorting system comprises at least one waste sorting unit 1. The at least one waste sorting unit 1 is adapted to sort waste objects. The waste sorting system 100 comprises a control device. The control device is adapted to control the waste sorting system 100 so as to sort waste objects by controlling the at least one waste sorting unit 1 based on data from the volume measurement device and the weight measuring device.

The control unit is adapted to control the waste sorting system 100 based on available capacity of the parts 101, 102, 103, 104, 105 of the waste sorting system 100. The control unit is adapted to control each part of the waste sorting system 100 such that the overall amount of sorting done by the waste sorting system 100 as a whole is increased.

The waste sorting system 100 comprises a frame structure 100b. The frame structure 100b comprises a main frame structure extending along a dominant direction of the waste sorting system 100. The frame structure 100b comprises a plurality of secondary frame structures extending perpendicularly from the main frame structure. The plurality of secondary frame structures is arranged to form a set of sorting zones 1000.

The waste sorting system 100 comprises a waste inlet opening 100A. The waste sorting system 100 comprises a waste outlet opening 100B. The waste inlet opening 100A is adapted to receive unsorted waste. The waste sorting system 100 is adapted to sort the unsorted waste and dump it into the sorting zones 1000 arranged below the waste sorting system 100. The sorting zones 1000 are associated with a particular type of sorted (or unsorted) waste objects. In each sorting zone 1000, a receptacle for receiving and storing a particular type of sorted waste objects can be placed. When full, the receptacles may be removed and emptied. In the meanwhile, empty receptacles may be placed inside the sorting zones in their place.

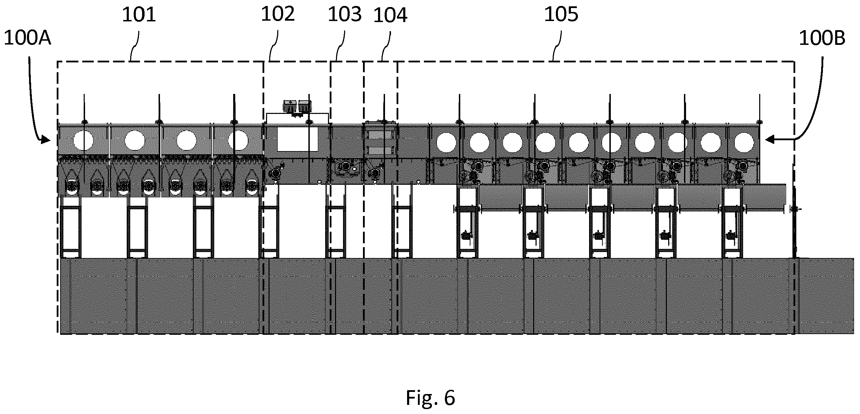

Fig. 6 illustrates a side view of the waste sorting system according to one embodiment of the invention, wherein a plurality of shell portions has been omitted from the view.

Unsorted waste which enter the waste inlet opening 100A are first being separated by the separating device 101. Here, a plurality of separating rollers driven by an actuator work in tandem to separate the waste objects from each other by a predetermined separating distance. The separating distance may be 0,5 m. The waste objects enter the waste inlet opening 100A and enters the inlet end of the separating device 101. The separating device 101 separates the waste objects by the predetermined distance by controlling each roller and separating roller. Then the separated waste objects are transported to the outlet end of the separating device 101. The rollers and separating rollers are arranged parallel and at a distance from each other so that objects smaller than the preferred waste object size interval fall by means of gravity through the rollers and separating rollers.

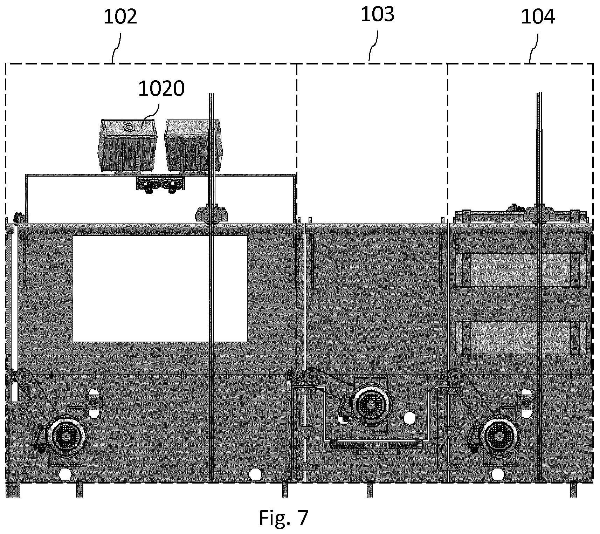

The separated waste objects are then transported to the volume measuring device 102. The volume measuring device 102 is also illustrated in Fig. 7. The volume measuring device comprises a plurality of imaging units which are oriented to image waste objects entering an imaging zone below the imaging units. Based on the images of the imaged waste objects, their volumes may be determined. The system determines a polygon mesh from the images obtained when imaging a waste object. Then, the polygon mesh is integrated so that the volume of the waste object is determined.

The separated waste objects are then transported to the weight measuring device 103. The weight is determined by a load cell which is configured to measure the weight of the waste object as it is located on the conveyor belt system portion. The load cell generates an electric signal indicative of the weight of the waste object on the conveyor belt system portion, and this electric signal is then used to determine the weight of said waste object.

The separated waste objects are then transported to the texture measuring device 104. The texture measuring device 104 comprises an imaging device. The texture measuring device may determine the color, patterns and surface structure of an imaged waste objects.

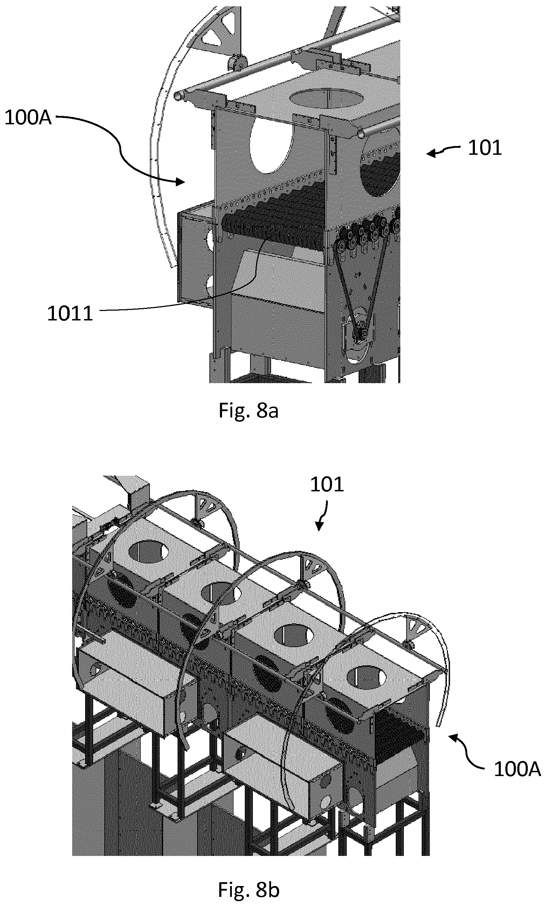

Figs. 8a - 8b illustrate various parts of the waste sorting system according to one embodiment of the invention. In Fig. 8a, the waste inlet opening 100A is shown, along with the separating rollers 1011. In Fig. 8b, the separating device 101 is illustrated as shown in a perspective view.

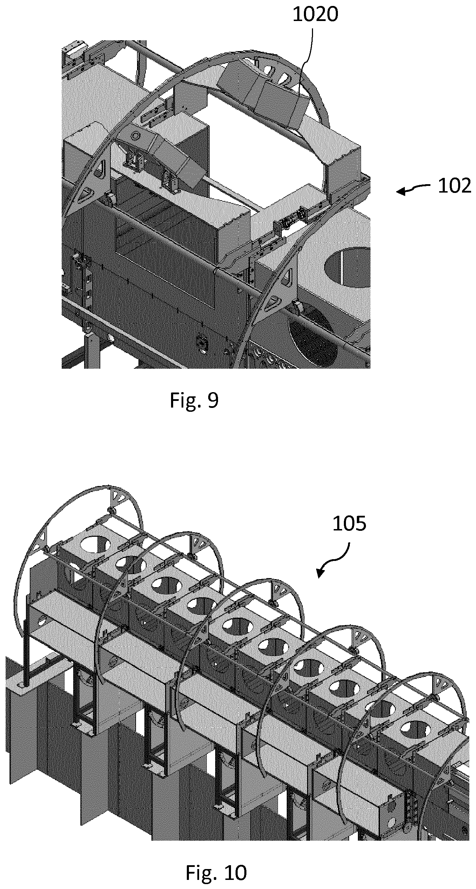

Fig. 9 illustrate a part of the waste sorting system according to one embodiment of the invention. Here, the volume measuring device 102 is shown as seen in a perspective view.

Fig. 10 illustrate a part of the waste sorting system according to one embodiment of the invention. In Fig. 10, a plurality 105 of waste sorting units are arranged in series. Each waste sorting unit may be predetermined to sort a particular type of waste object. For instance, a first waste sorting unit may be configured to sort glass, a second waste sorting unit may be configured to sort wood, and a third waste sorting unit may be configured to sort aluminum. Hence, the system may keep track of each separated waste object and sort it accordingly as it is calculated or detected to arrive at the corresponding waste sorting unit.

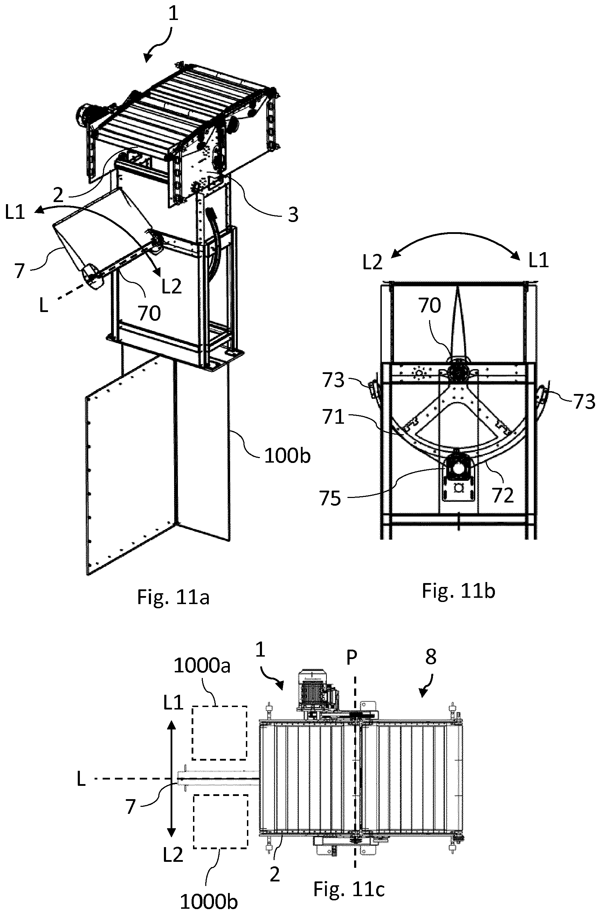

Figs. 11a - 11b illustrate various views of the waste sorting unit 1, along with a portion of the waste sorting system, according to one embodiment of the invention.

The waste sorting unit 1 comprises a sorting guide 7. The sorting guide 7 is arranged to rotate below the waste sorting member 2 between a first lateral position L1 and a second lateral position L2. The sorting guide 7 is rotatably arranged to the support structure 3 of the waste sorting unit 1. The sorting guide 7 is adapted to rotate about a rotating axis L perpendicular to the rotating axis P of the waste sorting member 2.

The sorting guide 7 is shaped in size and form so as to sort waste objects into a first sorting zone 1000a while being in said first lateral position L1, and to sort waste into a second sorting zone 1000b while being in said second lateral position L2, see Fig. 11c.

The sorting guide comprises two large plate-like structures which are arranged to join each other along an upper edge, which when rotated forms a slide, as shown in Fig. 11a. The large plate-like structures are rectangular in shape and are provided with a slight curvature. The opposite edges of the plate-like structures are arranged to a main shaft 70. The main shaft 70 is adapted to be rotatable relative the support structure 3 of the waste sorting unit 1. The main shaft 70 is adapted to be rotatably coupled to the support structure 3 of the waste sorting unit 1 to rotate about the rotating axis L.

The waste sorting unit 1 is adapted so that the rotating axis L of the sorting guide 7 is centered below the waste sorting member 2, as shown in Fig. 11c.

The sorting guide 7 comprises a counterweight 71. The counterweight 71 may facilitate the sorting guide 7 in returning to an equilibrium position, i.e. a position in which the sorting guide is balanced in terms of gravitational influence. The sorting guide 7 is adapted such that sorting guide 7 is oriented in a vertical position when in the equilibrium position, as shown in Fig. 11b. The counterweight 71 is arranged to one end of the main shaft 70 of the sorting guide 7. The main shaft 70 of the sorting guide 7 extends through the support structure 3 of the waste sorting unit 2. The counterweight 71 is arranged to the end 70 extending through the support structure 3 of the waste sorting unit 1. The counterweight 70 of the sorting guide 71 extends symmetrically away from the main shaft 70 of the sorting guide 71. The counterweight 71 extends along arcs extending outward from the main shaft 70.

The sorting guide 7 comprises an actuator 75 operatively coupled to the sorting guide 7. The actuator 75 is a servo motor. The actuator 75 is adapted to actuate movement of the sorting guide 7 between the first lateral position L1 and the second lateral position L2 by rotating an actuator head relative an actuator housing about an actuator axis. The actuator housing is arranged fixedly relative the support structure 3 of the waste sorting unit 1. The actuator is adapted to be controlled by the control unit.

The sorting guide 7 comprises an actuator coupling element 72. The actuator coupling element 72 extends partly in a circumferential direction of the counterweight 71. The actuator head of the actuator 75 is adapted to rotatably engage with the actuator coupling element 72, as illustrated in Fig. 11b. The actuator 75 is adapted to move the sorting guide 7 between the first lateral position L1 and the second lateral direction L2 by rotating the actuator head relative the actuator housing.

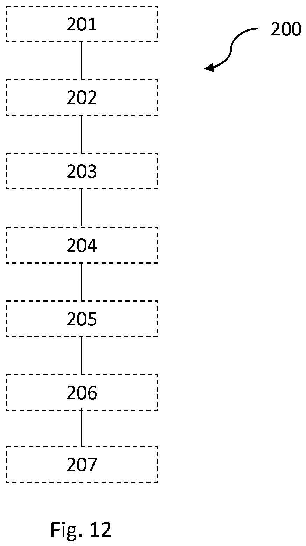

Fig. 12 illustrate a flow chart of a method 200 according to one embodiment of the invention.

The method 200 comprises a step 201 of providing unsorted waste. The method comprises a step 202 of separating unsorted waste into waste objects that are to be sorted. The method comprises a step 203 of measuring a volume of one of the waste objects. The method may comprise a step 204 of measuring a weight of said one of the waste objects. The method may comprise a step 206 of sorting said one of the waste objects. The step 207 of sorting may be performed by means of a waste sorting unit 1 according to the first aspect of the invention, or any embodiments thereof. The step 207 of sorting may be performed based on the measured volume of said one of the waste objects. The step 207 of sorting may be performed based on the measured weight of said one of the waste objects.

The method may further comprise a step 205 of measuring a texture of said one of the waste objects. The method may comprise a step 206 of cross checking the measured texture with a database comprising a set of annotated images of waste objects. If a match is found, the step 207 of sorting may be performed based on the measured texture of said one of the waste objects.

The steps 203, 204, 205 of the method may be performed in any order.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A waste sorting unit (1) for sorting construction waste, comprising:
a waste sorting member (2) comprising:
a conveyor pulley (20);
at least one roller (21);
a conveyor belt (22) arranged around the conveyor pulley (20) and the at least one roller (21);
a support structure (3) to which the waste sorting member (2) is arranged,
wherein waste sorting member (2) is adapted to rotate relative the support structure (3) between a first position (P1) in which it is adapted for transporting waste objects to an upper output level (UOL) and a second position (P2) in which it is adapted for transporting waste objects to a lower output level (LOL).

2. The waste sorting unit (1) according to claim 1, wherein the waste sorting member (3) at the second position (P2) is sufficiently rotated with respect to a vertical axis (Z) so that waste objects on the waste sorting member (2) slides off by means of gravity.

3. The waste sorting unit (1) according to any of claims 1 - 2, wherein the waste sorting member (2) is adapted to rotate relative the support structure (3) such that the rotate axis (P) is perpendicular to a transporting direction (T) of the waste sorting unit (1).

4. The waste sorting unit (1) according to any preceding claims, comprising an actuator (4) operatively coupled to the waste sorting member (2), the actuator (4) adapted to actuate movement of the waste sorting member (2) between the first position (P1) and the second position (P2).

5. The waste sorting unit (1) according to any preceding claims, comprising a crankshaft (5) rotatably arranged to the support structure (3), the crankshaft (5) comprising a main axle (51) and a crankpin (52) axially offset from the main axle, and a connecting member (55) elongate in shape, having a first end (55a) rotatably coupled to the crankpin (52) and a second end (55b) rotatably coupled to the waste sorting member (2).

6. The waste sorting unit (1) according to any preceding claims, comprising a sorting guide (7) arranged to rotate below the waste sorting member (2) between a first lateral position (L1) and a second lateral position (L2).

7. A waste sorting system (100) for sorting construction waste, comprising
a separating device adapted to separate waste objects (W, W') that are to be sorted;
a volume measuring device adapted to measure volume of waste objects (W, W') that are to be sorted;
a weight measuring device adapted to measure weight of waste objects (W, W') that are to be sorted;
at least one waste sorting unit adapted to sort waste objects;
a control device adapted to control the waste sorting system (100) so as to sort waste objects (W, W') by controlling the at least one waste sorting unit, based on data from the volume measuring device and the weight measuring device.

8. The waste sorting system (100) according to claim 7, wherein at least one of the at least one waste sorting unit is a waste sorting unit (1) according to any of claims 1 - 6, adapted to sort waste objects (W, W') by rotating the respective waste sorting member between the first position (P1) and the second position (P2).

9. The waste sorting system (100) according to any of claims 7 - 8, comprising a texture measuring device adapted to measure texture of waste objects (W, W'), wherein the waste sorting system is adapted to sort waste objects by means of the at least one waste sorting unit based on data from the texture measuring device.

10. The waste sorting system (100) according to any of claims 7 - 9, comprising one or more sensory devices selected from a group of sensory devices comprising:
- a magnetic metal detecting device for providing data indicating the presence of magnetic metals;
- an induction device for providing data indicating the presence of nonmagnetic metals,
wherein the waste sorting system (100) is adapted to sort waste objects by means of the at least one waste sorting unit based on data received by the one or more sensory devices.

11. The waste sorting system (100) according to any of claims 7 - 10, adapted to be remote controlled.

12. The waste sorting system according to any of claims 7 - 11, wherein the waste sorting system is adapted to be modular, the waste sorting system comprising a set of optional waste sorting system modules selected from a group of waste sorting system modules comprising:
- a separating module comprising the separating device;
- a volume measuring module comprising the volume measuring device;
- a weight measuring module comprising the weight measuring device;
- a texture measuring module comprising the texture measuring device;
- a transporting module for transporting waste objects between any two waste sorting system modules;
- a feeder module for feeding waste to the separating module;
- a magnetic metal detecting module comprising the magnetic metal detecting device;
- an induction module comprising the induction detecting device.

13. Method (200) for sorting waste and in particular construction waste, comprising the steps of:
providing (201) unsorted waste;
separating (202) unsorted waste into waste objects that are to be sorted;
measuring (203) a volume of one of the waste objects;
measuring (204) a weight of said one of the waste objects;
sorting (207) said one of the waste objects by means of a waste sorting unit according to any of claims 1 - 6, wherein the step of sorting (207) is performed based on measured volume and weight of said one of the waste object.

14. Use of a waste sorting unit according to any of claims 1 - 6, for sorting construction waste.

15. Use of a waste sorting system according to any of claims 7 - 12, for sorting construction waste.
